Europäisches Patentamt

European Patent Office

Office européen des brevets

(19)

(11) Numéro de publication : **0 216 041 B1**

(12) **FASCICULE DE BREVET EUROPEEN**

(45) Date de publication du fascicule du brevet :
05.06.91 Bulletin 91/23

(51) Int. Cl.⁵ : **G01B 21/04**

(21) Numéro de dépôt : 86109263.3

(22) Date de dépôt : 07.07.86

(54) Procédé et appareil pour la mesure tridimensionnelle d'un objet.

(30) Priorité : 01.08.85 US 761356

(43) Date de publication de la demande :
01.04.87 Bulletin 87/14

(45) Mention de la délivrance du brevet :
05.06.91 Bulletin 91/23

(84) Etats contractants désignés :
CH DE FR GB IT LI SE

(56) Documents cités :
FR-A- 2 547 916
GB-A- 2 131 956

(73) Titulaire : **BROWN & SHARPE
MANUFACTURING COMPANY
Precision Park
North Kingston, RI 02852 (US)**
Titulaire : **TESA S.A.
Rue Bugnon 38
CH-1020 Renens (CH)**

(72) Inventeur : **Braman, David P.
6 Nichols Road
North Kingstown Rhode Island 02852 (US)**
Inventeur : **Honer, A. Michael
190 Steamboat Avenue
North Kingstown Rhode Island 02852 (US)**

(74) Mandataire : **Misrachi, Alfred
15, Ch. de la Plantaz
CH-1024 Ecublens (CH)**

EP 0 216 041 B1

## Description

La présente invention a pour objet un procédé et un appareil pour la mesure tridimensionnelle d'un objet, tel que par exemple une pièce d'un mécanisme ou d'une machine, selon trois axes référentiels de coordonnées rectangulaires x, y et z.

Le procédé est du genre dans lequel on installe l'objet à mesurer sur une table plane, on déplace un palpeur à touche sphérique de diamètre donné relié à un dispositif de détection sensible à ses déplacements dans les directions parallèles et perpendiculaires à la table plane jusqu'à le mettre en contact avec l'objet à mesurer, et dans lequel on calcule les coordonnées du point de contact de la touche sphérique avec l'objet à mesurer à partir de la position du centre de ladite touche sphérique détectée par le dispositif de détection et par référence aux trois axes de coordonnées rectangulaires.

Dans tous les procédés de mesure connus de ce genre, la prise de mesure est effectuée selon des étapes successives par lesquelles un palpeur à touche de mesure sphérique de diamètre donné est déplacé successivement ou simultanément dans trois directions parallèles aux trois axes référentiels précités jusqu'à mettre sa touche sphérique en contact avec la pièce à mesurer, par lesquelles la position du centre de la touche sphérique en contact avec la pièce à mesurer est détectée dans trois systèmes de détection linéaires établis parallèlement à ces trois axes référentiels, et par lesquelles les coordonnées du point de contact de cette touche sphérique avec l'objet à mesurer, abcisse x, ordonnée y et cote z, sont calculées à partir des positions de son centre détectées dans les trois systèmes de détection linéaires et de son diamètre.

Les appareils connus permettant l'application de ces procédés comprennent une table plane destinée à supporter l'objet à mesurer et un bâti sur lequel sont montées trois unités de déplacement constituées chacune par une glissière rectiligne et un chariot mobile le long de cette glissière. Dans ces unités de déplacement, les trois glissières sont orientées parallèlement aux trois axes référentiels de coordonnées rectangulaires x, y et z. L'un des trois chariots est monté mobile sur la glissière parallèle à l'axe des cotes z et porte le palpeur à touche de mesure sphérique.

Sur certains de ces appareils connus, la table plane est fixe et solidaire du bâti, et les trois unités de déplacement sont montées l'une sur l'autre à la manière des chariots porte-outils des machines-outils, la glissière de la première fixée au bâti et le chariot de la dernière portant le palpeur à touche sphérique. Lors de la prise de mesure, le palpeur est déplacé dans trois directions parallèles aux trois axes référentiels par déplacements successifs ou simultanés des chariots des trois unités de déplacement jusqu'à amener sa touche sphérique en contact avec la pièce à mesurer.

Sur d'autres appareils connus, la table plane est montée mobile sur le bâti dans deux directions parallèles aux axes des abcisses x et des ordonnées y par le moyen de deux unités de déplacement, et le palpeur est fixé sur le chariot d'une troisième unité de déplacement dont la glissière est solidaire du bâti et orientée parallèlement à l'axe des cotes z. Lors de la prise de mesure ce sont à la fois la table et le palpeur qui sont déplacés pour amener la touche sphérique de ce dernier en contact avec la pièce à mesurer, la table dans deux directions parallèles aux axes des abcisses x et des ordonnées y et le palpeur dans une direction parallèle à l'axe des cotes z.

Sur la plupart de ces appareils connus, un dispositif de détection sensible aux déplacements d'un chariot le long d'une glissière est associé à chaque unité de déplacement et les trois dispositifs de déplacement ainsi établis sont reliés à un circuit transducteur de mesure destiné à traduire en grandeurs quantifiées les coordonnées du point de contact de la touche sphérique du palpeur avec l'objet à mesurer par référence aux trois axes de coordonnées et selon le procédé de mesure précité.

Des moyens sont également prévus pour permettre le choix par l'opérateur de l'initialisation de la mesure définissant le zéro le long de chaque axe référentiel ainsi que pour l'affichage, la mémorisation ou le traitement des grandeurs mesurées.

Le procédé de mesure pour l'application duquel ont été conçus les appareils précités nécessite pour ceux-ci des structures mécaniques lourdes et encombrantes du fait de la superposition de leurs unités de déplacement dont la masse doit être d'autant plus grande que leur capacité de mesure est plus grande, afin de ne pas introduire de facteurs d'erreurs, inhérents à l'élasticité de ces structures et pouvant affecter la précision requise. Il n'est pas d'autre moyen en effet, pour mettre en oeuvre ce procédé et pour pouvoir quantifier les déplacements du palpeur dans les trois directions des axes référentiels, que de guider celui-ci rigoureusement et parallèlement à ces axes par le moyen des trois unités de déplacement mécaniques à chariot et glissière précitées.

Il existe par contre un autre procédé de mesure tridimensionnelle, applicable aux appareils précités, conçu dans le but d'éviter les facteurs d'erreurs de mesure générées par l'élasticité de leurs structures de grande masse.

Ce procédé de mesure, décrit dans le document FR 2547916, consiste à mesurer la position du palpeur indépendamment de la structure qui l'anime :

    – en lui associant au moins un point de repère, matérialisé par une rotule sphérique,

    – en mesurant les distances dudit point de repère à trois points fixes, matérialisés également par des rotules sphériques, pris sur le bâti du banc de mesure de l'appareil, à l'aide soit d'un système de tubes coulissants associés à une règle optique, soit d'une lunette optique ou d'un télémètre,

– en résolvant par le calcul un système de trois équations intégrant les coordonnées cartésiennes des trois points de référence et les mesures de leurs distances au point de repère et,

– en déduisant de cette résolution les coordonnées du palpeur.

Une variante préconise l'association de deux points de référence au lieu d'un seul, alignés sur le palpeur, pour encore davantage de précision.

Mais ce procédé différent ne dispense pas pour autant de devoir utiliser un appareil du genre précité équipé de ses trois unités de déplacement, de grande masse, pour amener le palpeur en contact avec la pièce à mesurer.

Sur un appareil connu d'un autre genre, approprié uniquement à la mesure de hauteurs selon un axe référentiel de cote z perpendiculaire au plan d'une table plane destinée à supporter un objet à mesurer, le dispositif de déplacement du palpeur à touche sphérique comprend un bâti mobile à semelle d'appui plane reposant sur la table et destinée à être déplacée aléatoirement sur le plan de celle-ci, une glissière rectiligne solidaire du bâti et perpendiculaire au plan de la semelle, et un chariot déplaçable le long de cette glissière et sur lequel est fixé le palpeur à touche sphérique en position déportée par rapport à la semelle. Lors d'une prise de mesure, le palpeur est mis en contact avec l'objet à mesurer par déplacement aléatoire de la semelle du bâti sur la table et par déplacement du chariot sur la glissière. Pour faciliter le déplacement de la semelle sur le plan de la table, un dispositif de sustentation par coussin d'air est prévu.

Cet appareil, qui peut être de faible masse du fait qu'il ne comporte qu'une seule unité de déplacement à glissière et chariot n'est cependant pas prévu et ne comporte aucun moyen pour permettre la mesure tridimensionnelle d'un objet.

Le procédé de mesure tridimensionnelle selon l'invention a pour but de permettre la création d'un appareil de mesure tridimensionnelle de masse nettement plus faible que celle des appareils connus précités pour une même capacité de mesure dans les directions des trois axes référentiels.

A cet effet, le procédé de mesure selon l'invention est caractérisé par les étapes suivantes :

– installer l'objet à mesurer sur un système de détection plan du type réseau à deux axes de coordonnées rectangulaires x et y ;

– associer au système de détection plan du type réseau un système de détection linéaire selon un troisième axe de coordonnées z perpendiculaire aux deux premiers, solidaire d'un bâti mobile apte à être déplacé aléatoirement sur ledit système de détection plan du type réseau, pour former avec celui-ci un système de détection à trois axes de coordonnées ;

– associer au bâti mobile du système de détection linéaire deux points de palpage $P_1$ et $P_2$ placés sur un support situé dans le plan du système de détection plan, ces deux points étant à distance constante l'un de l'autre ;

– associer au système de détection linéaire le palpeur à touche sphérique, mobile le long du troisième axe de coordonnées z de ce système, et de manière à ce que la projection orthogonale $P'$ de son centre P sur le système de détection plan soit à position fixe et déportée par rapport au segment de droite formé par les deux points de palpage $P_1$ et $P_2$ ;

– déplacer aléatoirement le bâti mobile du système de détection linéaire auquel sont associés les deux points de palpage $P_1$ et $P_2$ sur le plan du système de détection à deux axes de coordonnées x et y et déplacer le palpeur à touche sphérique le long du troisième axe de coordonnées z du système de détection à trois axes de coordonnées x, y et z pour l'amener en contact avec l'objet à mesurer ;

– détecter la position des deux points de palpage $P_1$ et $P_2$ dans le système de détection plan à deux axes de coordonnées x et y ;

– calculer les coordonnées, abcisse x et ordonnée y, du point de contact de la touche sphérique du palpeur avec l'objet à mesurer dans le système de détection plan du type réseau à deux axes de coordonnées x et y à partir de la position détectée des deux points de palpage $P_1$ et $P_2$, de la position relative de la projection orthogonale $P'$ du centre P de la touche sphérique du palpeur par rapport à ces deux points, et du diamètre D de cette dernière ;

– détecter la position du centre P de la touche sphérique le long du troisième axe de coordonnées z du système de détection linéaire ;

– calculer la cote z du point de contact de la touche sphérique du palpeur avec l'objet à mesurer dans le système de détection linéaire selon le troisième axe de coordonnées z à partir de la position détectée du centre P de la touche sphérique et du diamètre D de cette dernière.

De la sorte, il n'est plus nécessaire de guider les déplacements du palpeur selon les axes de coordonnées x et y du plan de la table pour pouvoir détecter la position du centre de sa touche sphérique dans ce plan et pour calculer ses coordonnées, abcisse x et ordonnée y. Ceci libère de la nécessité d'un guidage rectiligne mécanique rigoureux dans ces deux directions.

L'appareil de mesure selon l'invention, conçu pour pouvoir mettre en oeuvre ce procédé, a ceci de commun avec les appareils de mesure tridimensionnelle connus cités en début d'exposé qu'il comprend une table plane destinée à supporter l'objet à mesurer, un palpeur à touche sphérique de diamètre donné mobile par rapport à la table et dont le centre définit un point de référence significatif de sa position spatiale par rapport aux trois axes référentiels, un dispositif de déplacement du palpeur à touche sphérique dans les directions perpendiculaires et parallèles à la table plane et un circuit transducteur de mesure sensible aux déplacements du palpeur et destiné à traduire en grandeurs quantifiées les coordonnées du point de contact de la touche sphérique du palpeur avec la pièce à mesurer par référence aux trois axes de coordonnées.

Cet appareil est caractérisé en ce que le dispositif de déplacement du palpeur à touche sphérique comprend un bâti mobile à semelle d'appui plane reposant sur la table et destinée à être déplacée aléatoirement sur le plan de celle-ci, une glissière rectiligne solidaire du bâti et perpendiculaire au plan de la semelle d'appui, et un chariot déplaçable le long de cette glissière et sur lequel est fixé le palpeur à touche de mesure sphérique en position déportée par rapport à la semelle d'appui, en ce que la semelle d'appui du bâti mobile comporte deux organes repères définissant deux points de palpage d'une droite parallèle à la table, ces deux points étant de ce fait en positions fixes par rapport à la projection orthogonale du centre de référence de la touche sphérique du palpeur sur le plan de la table, en ce que la table est associée à un dispositif de détection plan comportant un réseau d'organes détecteurs orientés selon deux premiers axes de coordonnées rectangulaires de son plan, abcisses x et ordonnées y, et sensibles aux variations de positions de l'ensemble des deux organes repères de la semelle du bâti mobile provoquées par les déplacements aléatoires de celui-ci, pour détecter la position de chacun des deux points définis par ces organes repères par référence à ces deux premiers axes de coordonnées, en ce que le bâti mobile est associé à un dispositif de détection linéaire comportant un organe détecteur sensible au déplacement du chariot le long de la glissière pour détecter la position du centre de la touche sphérique du palpeur le long d'un troisième axe de coordonnées, cotes z, matérialisé par cette glissière, et en ce que le circuit transducteur de mesure est relié aux dispositifs de détection plan et linéaire et comporte une unité de calcul programmable pour calculer les coordonnées, abcisses x et ordonnées y, du point de contact de la touche sphérique du palpeur avec l'objet à mesurer à partir de la position détectée des deux points de palpage par le dispositif de détection plan, de la position relative de la projection orthogonale du centre de la touche sphérique par rapport à ces deux points, et du diamètre de cette dernière, et pour calculer la cote z du point de contact de la touche sphérique avec l'objet à mesurer à partir de la position détectée dudit centre de la touche sphérique par le dispositif de détection linéaire et du diamètre de cette dernière.

De la sorte, l'appareil de mesure ainsi réalisé permet l'application du procédé de mesure tridimensionnelle selon l'invention et répond bien à son but du fait que, par rapport aux appareils de mesure tridimensionnelle connus et cités en début d'exposé, il ne comporte qu'un seul dispositif de déplacement du palpeur au lieu de trois, ce qui lui confère, à capacités de mesures égales, un gain de poids considérable.

En outre, et ce n'est pas là un moindre avantage, la manoeuvrabilité du bâti mobile portant le palpeur sur la table, par déplacements aléatoires, permet d'explorer l'objet à mesurer en tous sens et dans toutes directions autour de lui, ce qui n'est pas réalisable avec les appareils de mesure tridimensionnelle connus sur lesquels les déplacements du palpeur sont limités aux seules trois directions rectilignes données par les trois glissières de leurs trois unités de déplacement.

Le dessin annexé illustre géométriquement le procédé de mesure tridimensionnelle selon l'invention et représente, à titre d'exemple, une forme d'exécution de l'appareil de mesure.

La figure 1 est un schéma illustrant le procédé de mesure.

La figure 2 est une vue d'ensemble en perspective de l'appareil de mesure.

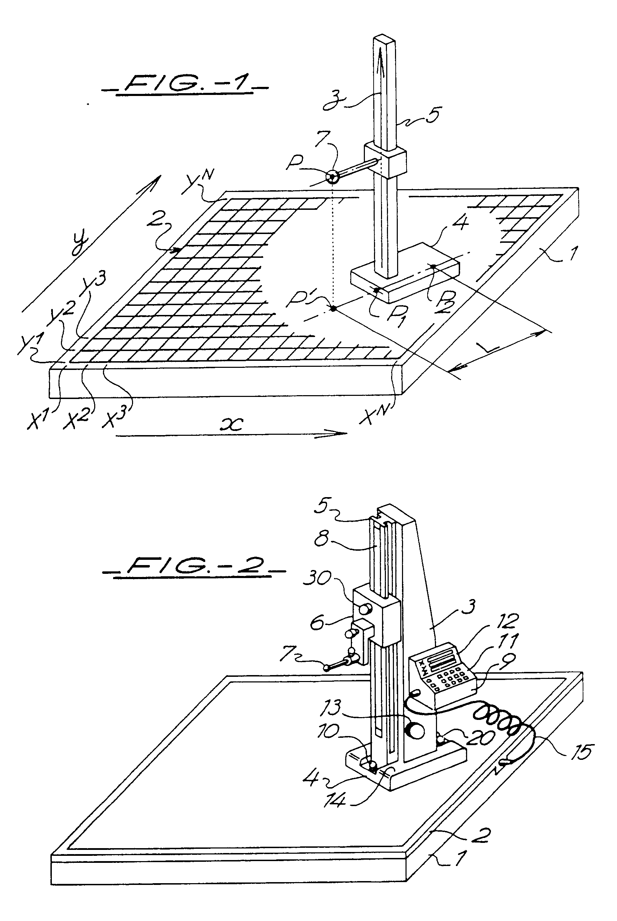

L'appareil de mesure tridimensionnelle représenté figure 2 se présente sous l'aspect général de l'association d'une table plane 1, destinée à supporter un objet à mesurer, et d'un dispositif de déplacement d'un palpeur 7 de mesure à touche sphérique composé d'un bâti mobile 3 à semelle d'appui plane 4 reposant sur la table, d'une glissière rectiligne 5 solidaire du bâti et perpendiculaire au plan de la semelle d'appui 4 et d'un chariot 6 déplaçable le long de cette glissière et sur lequel est fixé le palpeur à touche sphérique 7 en position déportée par rapport à la semelle d'appui 4.

Le plan de la table 1, sur lequel repose la semelle d'appui 4 du dispositif de déplacement du palpeur, est constitué par la face sensible d'un dispositif de détection plan 2, associé à cette table, et qui permet de définir un système de détection plan du type réseau à deux axes référentiels de coordonnées rectangulaires x et y, schématisé figure 1.

Ce dispositif de détection plan du type réseau peut être de tout genre connu, tel que par exemple le système électrostatique de coordonnées décrit dans la demande de brevet publiée anglaise No 2 131 956 et représenté figures 1 et 2 de ce document, et dont le plan de détection est constitué par un réseau d'électrodes rectilignes $X_1$, $X_2$... $X_N$ et $Y_1$, $Y_2$... $Y_N$ disposées parallèlement aux deux axes référentiels de coordonnées x et y du plan de la table 1.

La semelle d'appui 4 du dispositif de déplacement du palpeur comporte deux organes repères 10 et 20 espacés l'un de l'autre, aptes à influencer les organes détecteurs du dispositif de détection plan du type réseau, et qui peuvent être constitués, par exemple dans le cas d'utilisation d'un système électrostatique de coordonnées du genre précité, par deux électrodes ponctuelles. Ces deux organes repères 10 et 20 sont significatifs de la position et de l'orientation de la semelle sur le plan de la table par le fait qu'ils permettent de définir deux points de palpage $P_1$ et $P_2$, représentés figure 1, dans le plan du système de détection à deux axes de coordonnées x et y.

De son côté, la touche sphérique 7 du palpeur permet de définir un point de repère de sa position dans ce même plan constitué par la projection orthogonale ou trace P' de son centre P sur ce plan dont la position est fixe par rapport aux deux points de palpage $P_1$ et $P_2$ précités. Dans l'exemple d'exécution représenté, cette trace P' du centre P de la touche sphérique du palpeur est située dans le prolongement du segment de droite $\overline{P_1 P_2}$ joignant les deux points de palpage $P_1$ et $P_2$, à une distance L prédéterminée de l'un de ces deux points, ici le point $P_2$, cette distance L étant prévue suffisante pour que la semelle d'appui 4 ne vienne pas buter contre l'objet à mesurer lors d'une opération de prise de mesure.

Le bâti mobile 3 du dispositif de déplacement du palpeur est associé à un dispositif de détection linéaire comportant un organe sensible aux déplacements du chariot 6 le long de la glissière 5, qui est constitué ici par un système opto-électronique de type usuel composé d'une règle graduée en verre 8 fixée en position parallèle à la glissière 5 et d'un capteur opto-électronique 30 constituant l'organe sensible de ce système, fixé au chariot 6. Ce dispositif de détection, qui peut être de tout autre genre connu, permet de définir un système de détection linéaire selon un troisième axe de coordonnées z perpendiculaire au plan de système de détection plan à deux axes de coordonnées x et y pour former avec ce dernier un système de détection à trois axes de coordonnées rectangulaires x, y et z, et de détecter la position du centre P de la touche sphérique 7 du palpeur le long de ce troisième axe de coordonnées, les déplacements de ce chariot et de cette touche le long de cet axe de coordonnées étant identiques.

Le chariot 6 est déplaçable le long de la glissière 5 par le moyen d'un volant de manoeuvre 13 connecté à un dispositif de transformation de mouvement, non visible sur le dessin, du type poulies-courroie intégré au bâti 3.

Un boîtier 9 à pupitre de commande 11 et à tableau d'affichage de valeurs 12 est fixé au bâti 3 du dispositif de déplacement du palpeur. Dans ce boîtier 9 sont installés les circuits usuels d'alimentation des organes sensibles des dispositifs de détection plan et linéaire, reliés à l'extérieur au dispositif de détection plan par un câble souple 15, et les circuits transducteurs de mise en forme et de quantification des signaux produits par ces organes, ainsi qu'une unité de calcul programmable, par exemple un micro-processeur, reliée à ces circuits et destinée à calculer les coordonnées, abcisses x, ordonnée y et cote z du point de contact de la touche sphérique 7 du palpeur avec la pièce à mesurer.

Afin de faciliter les déplacements de la semelle 4 du bâti 3 sur le plan de la table, un dispositif de sustentation à coussin d'air 14 de type connu est intégré à cette semelle.

Lors d'une prise de mesure, la semelle 4 du dispositif de déplacement du palpeur est déplacée aléatoirement sur le plan de la table et le chariot 6 est déplacé le long de la glissière 5 par l'opérateur jusqu'à mettre la touche sphérique 7 du palpeur en contact avec l'objet à mesurer, par exemple en un point initial de mesure dont on désire connaître les coordonnées spatiales x, y et z par rapport à un zéro préalablement affiché par l'opérateur sur le tableau d'affichage 12 pour chacun de ces axes de coordonnées.

Une fois le dispositif de déplacement immobilisé sur la table en position de contact de la touche sphérique 7 sur l'objet à mesurer, ici par relâchement de la pression d'air du dispositif de sustentation 14 de la semelle, et les circuits de mesurage enclenchés, le calcul des coordonnées de ce point de contact est effectué ici par l'unité de calcul de la manière suivante :

– le calcul de l'abcisse x et de l'ordonnée y est effectué, dans le système de détection plan du type réseau, à partir de la position détectée des deux points de palpage $P_1$ et $P_2$ matérialisés par les organes repères 10 et 20 de la semelle 4, de la position relative connue de la projection orthogonale ou trace P' du centre P de la touche sphérique 7 du palpeur par rapport à ces deux points qui est ici définie par la distance L déjà mentionnée, et du diamètre D de la touche sphérique 7.

– Le calcul de la cote z est effectué, dans le système de détection linéaire selon le troisième axe de coordonnées z, à partir de la position détectée du centre P de la touche qui est ici fournie directement par le capteur opto-électronique 30 fixé au chariot 6, et du diamètre D de cette touche.

Il est intéressant de noter ici qu'il est toujours possible, dans n'importe quelle position et orientation de la semelle d'appui 4 sur le plan de la table 1, de calculer les coordonnées x et y du centre P de la touche sphérique 7 du palpeur dans ce plan grâce à la détection rendue possible des coordonnées des points $P_1$ et $P_2$ qui permettent de déterminer la pente de la droite reliant ces deux points passant par la trace P' de ce centre. Partant de là, on note également que cet avantage subsiste pour n'importe quelle autre position de cette trace P' par rapport au segment $\overline{P_1 P_2}$, c'est-à-dire qu'il n'est pas indispensable que cette trace P' soit dans le prolongement de ce segment de droite. Concrètement, ceci permet l'utilisation de palpeurs à touche sphérique de longueurs et d'orientations différentes par rapport à la semelle d'appui 4, à charge toutefois pour l'opérateur de changer chaque fois l'algorithme de programmation de l'unité de calcul.

On note également que le dispositif de sustentation par coussin d'air 14 de la semelle du dispositif de déplacement du palpeur n'est pas indispensable mais que par contre il se prête avantageusement à la télécommande des déplacements de ce dispositif sur la table, par exemple de manière connue à l'aide de tuyères orientables ou fixes.

## Revendications

1. Procédé de mesure tridimensionnelle d'un objet selon trois axes référentiels de coordonnées rectangulaires (x, y, z) dans lequel on installe l'objet à mesurer sur une table plane, on déplace un palpeur à touche sphérique de diamètre donné relié à un dispositif de détection sensible à ses déplacements dans les directions parallèles et perpendiculaire à la table plane jusqu'à le mettre en contact avec l'objet à mesurer, et dans lequel on calcule les coordonnées du point de contact de la touche sphérique avec l'objet à mesurer à partir de la position du centre de ladite touche sphérique détectée par le dispositif de détection par référence aux trois axes de coordonnées rectangulaires, caractérisé par les étapes suivantes :

– installer l'objet à mesurer sur un système de détection plan du type réseau (2) à deux axes de coordonnées rectangulaires (x, y) ;

– associer au système de détection plan du type réseau (2) un système de détection linéaire (5) selon un troisième axe de coordonnées (z) perpendiculaire aux deux premiers (x, y), solidaire d'un bâti mobile (4) apte à être déplacé aléatoirement sur ledit système de détection plan du type réseau, pour former avec celui-ci un système de détection à trois axes de coordonnées ;

– associer au bâti mobile du système de détection linéaire deux points de palpage (P$_1$, P$_2$) placés sur un support situé dans le plan du système de détection plan, ces deux points étant à distance constante l'un de l'autre ;

– associer au système de détection linéaire le palpeur à touche sphérique (7), mobile le long du troisième axe de coordonnées (z) de ce système, et de manière à ce que la projection orthogonale (P') de son centre (P) sur ledit plan du système de détection plan soit à position fixe et déportée par rapport au segment de droite formé par les deux points de palpage (P$_1$, P$_2$) ;

– déplacer aléatoirement le bâti mobile (4) du système de détection linéaire auquel sont associés les deux points de palpage (P$_1$, P$_2$) sur le plan du système de détection à deux axes de coordonnées (x, y), et déplacer le palpeur à touche sphérique le long du troisième axe de coordonnée (z) du système de détection à trois axes de coordonnées (x, y, z) pour l'amener en contact avec l'objet à mesurer ;

– détecter la position des deux points de palpage (P$_1$, P$_2$) dans le système de détection plan à deux axes de coordonnées (x, y) ;

– calculer les coordonnées, abscisse (x) et ordonnée (y), du point de contact de la touche sphérique du palpeur avec l'objet à mesurer dans le système de détection plan du type réseau à deux axes de coordonnées (x, y) à partir de la position détectée des deux points de palpage (P$_1$, P$_2$), de la position relative de la projection orthogonale (P') du centre (P) de la touche sphérique du palpeur par rapport à ces deux points, et du diamètre (D) de cette dernière ;

– détecter la position du centre (P) de la touche sphérique le long du troisième axe de coordonnées (z) du système de détection linéaire ;

– calculer la cote (z) du point de contact de la touche sphérique du palpeur avec l'objet à mesurer dans le système de détection linéaire selon le troisième axe de coordonnées (z) à partir de la position détectée du centre (P) de la touche sphérique et du diamètre (D) de cette dernière.

2. Appareil pour la mesure tridimensionnelle d'un objet selon trois axes référentiels de coordonnées rectangulaires (x, y, z) comprenant une table plane destinée à supporter l'objet à mesurer, un palpeur à touche sphérique de diamètre donné (D), mobile par rapport à la table et dont le centre (P) définit un point de référence significatif de sa position spatiale par rapport aux trois axes référentiels, un dispositif de déplacement du palpeur à touche sphérique dans les directions perpendiculaires et parallèles à la table plane et un circuit transducteur de mesure sensible aux déplacements du palpeur et destiné à traduire en grandeurs quantifiées les coordonnées du point de contact de la touche sphérique avec la pièce à mesurer par référence aux trois axes de coordonnées (x, y, z), caractérisé en ce que le dispositif de déplacement du palpeur à touche sphérique (7) comprend un bâti mobile (3) à semelle d'appui plane (4) reposant sur la table (1) et destinée à être déplacée aléatoirement sur le plan de celle-ci, une glissière rectiligne (5) solidaire du bâti et perpendiculaire au plan de la semelle d'appui, et un chariot (6) déplaçable le long de cette glissière et sur lequel est fixé le palpeur à touche de mesure sphérique en position déportée par rapport à la semelle d'appui, en ce que la semelle d'appui du bâti mobile comporte deux organes repères (10, 20) définissant deux points de palpage (P$_1$, P$_2$) d'une droite parallèle à la table, ces deux points étant de ce fait en positions fixes par rapport à la projection orthogonale (P') du centre de référence (P) de la touche sphérique du palpeur sur le plan de la table, en ce que la table est associée à un dispositif de détection plan (2) comportant un réseau d'organes détecteurs $(X_N^1, Y_N^1)$ orientés selon deux premiers axes référentiels de coordonnées rectangulaires de son plan, abcisses (x) et ordonnées (y), et sensibles aux variations de positions de l'ensemble des deux organes repères de la semelle provoquées par les déplacements aléatoires de cette dernière pour détecter la position de chacun des deux points $(P_1, P_2)$ définis par ces organes repères par référence à ces deux premiers axes de coordonnées, en ce que le bâti mobile (3) est associé à un dispositif de détection linéaire comportant un organe détecteur (30) sensible aux déplacements du chariot le long de la glissière pour détecter la position du centre (P) de la touche sphérique du palpeur le long d'un troisième axe de coordonnées (cotes z) matérialisé par cette glissière, et en ce que le circuit transducteur de mesure est relié aux dispositifs de détection plan et linéaire et comporte une unité de calcul programmable pour calculer les coordonnées, abcisse (x) et ordonnée (y), du point de contact de la touche sphérique du palpeur avec l'objet à mesurer à partir de la position détectée des deux points de palpage $(P_1, P_2)$ par le dispositif de détection plan, de la position relative de la projection orthogonale (P') du centre (P) de la touche sphérique par rapport à ces deux points, et du diamètre (D) de cette dernière, et pour calculer la cote (z) du point de contact (P) de la touche sphérique avec l'objet à mesurer à partir de la position détectée dudit centre (P) de la touche sphérique par le dispositif de détection linéaire et du diamètre (D) de cette dernière.

## Ansprüche

1. Verfahren zur dreidimensionalen Messung eines Gegenstandes entlang drei rechtwinkligen Bezugskoordinatenachsen (x, y, z), in welchem das Meßobjekt auf einem flachen Tisch angeordnet wird, ein Fühler mit kugelförmiger Taste von vorgegebenem Durchmesser, der mit einer Erfassungsvorrichtung verbunden ist, die auf seine Verschiebungen parallel und lotrecht zum flachen Tisch anspricht, bis zur Berührung mit dem Meßobjekt verschoben wird, und in welchem die Koordinaten des Berührungspunktes der kugelförmigen Taste mit dem Meßobjekt, ausgehend von der durch die Erfassungsvorrichtung unter Bezugnahme auf die drei rechtwinkligen Koordinatenachsen ermittelten Position des Mittelpunktes dieser kugelförmigen Taste, berechnet werden, gekennzeichnet durch folgende Schritte :
    - Installieren des Meßobjektes auf einem ebenen Erfassungssystem nach Art eines Netzes (2) mit zwei rechtwinkligen Koordinatenachsen (x, y) ;
    - Verbinden des ebenen Erfassungssystems nach Art eines Netzes (2) mit einem linearen Erfassungssystem (5) für eine dritte, zu den beiden ersten Koordinatenachsen (x, y) senkrechte Koordinatenachse (z), die mit einem beweglichen Gestell (3) fest verbunden ist, das auf dem ebenen netzartigen Erfassungssystem regellos verschiebbar ist, derart, daß es mit diesem ein Erfassungssystem mit drei Koordinatenachsen bildet ;
    - Anordnen von zwei Fühlpunkten $(P_1, P_2)$ am beweglichen Gestell des linearen Erfassungssystems, die an einer Auflage in der Ebene des ebenen Erfassungssystems plaziert sind, wobei diese beiden Punkte einen gleichbleibenden Abstand zueinander aufweisen ;
    - Anordnen des Fühlers mit kugelförmiger Taste (7) am linearen Erfassungssystem, der entlang der dritten Koordinatenachse (z) des Systems bewegbar ist, derart, daß die Orthogonalprojektion (P') ihres Mittelpunktes (P) auf die Ebene des ebenen Erfassungssystems eine gegenüber dem von den beiden Fühlpunkten $(P_1, P_2)$ gebildeten Geradenabschnittes feststehende und versetzte Position aufweist ;
    - regelloses Verschieben des beweglichen Gestells (3) des linearen Erfassungssystems, an dem die zwei Fühlpunkte $(P_1, P_2)$ auf der Ebene des Erfassungssystems mit zwei Koordinatenachsen (x, y) angeordnet sind, und Verschieben des Fühlers mit kugelförmiger Taste entlang der dritten Koordinatenachse (z) des Erfassungssystems für drei Koordinatenachsen (x, y, z), um diese mit dem Meßobjekt in Berührung zu bringen ;
    - Erfassen der Position der beiden Fühlpunkte $(P_1, P_2)$ im ebenen Erfassungssystem mit zwei Koordinatenachsen (x, y) ;
    - Berechnung der Koordinaten, Abszisse (x) und Ordinate (y), vom Berührungspunkt der kugelförmigen Taste des Fühlers mit dem Meßobjekt im ebenen netzförmigen Erfassungssystem mit zwei Koordinatenachsen (x, y), ausgehend von der ermittelten Position der beiden Fühlpunkte $(P_1, P_2)$, von der relativen Position der Orthogonalprojektion (P') des Mittelpunktes (P) der kugelförmigen Taste des Fühlers, bezogen auf diese beiden Punkte und vom Durchmesser (D) dieser Taste ;
    - Erfassung der Position des Mittelpunktes (P) der kugelförmigen Taste entlang der dritten Koordinatenachse (z) des linearen Erfassungssystems ;
    - Berechnung des Maßes (z) des Berührungspunktes der kugelförmigen Taste des Fühlers mit dem Meßobjekt in dem linearen Erfassungssystem auf der dritten Koordinatenachse (z), ausgehend von der ermittelten Positon des Mittelpunktes (P) der kugelförmigen Taste und vom Durchmesser (D) dieser Taste.

2. Vorrichtung zur dreidimensionalen Messung eines Gegenstandes entlang drei rechtwinkligen Bezugskoordinatenachsen (x, y, z) mit einem flachen Tisch zur Aufnahme des Meßobjekts, einem Fühler mit kugelförmiger Taste von vorgegebenem Durchmesser (D), der im Verhältnis zum Tisch beweglich ist und dessen Mittelpunkt (P) einen Bezugspunkt definiert, der für seine räumliche Lage in bezug auf die drei Bezugsachsen signifikant ist, einer Vorrichtung zur Verschiebung des Fühlers mit kugelförmiger Taste lotrecht und parallel zum flachen Tisch und einem Meßwandler-Stromkreis, der auf die Verschiebungen des Fühlers anspricht und die Koordinaten des Berührungspunktes der kugelförmigen Taste mit dem Meßobjekt unter Bezugnahme auf die drei Koordinatenachsen (x, y, z) in quantifizierte Größen übersetzen soll, dadurch gekennzeichnet, daß die Vorrichtung zur Verschiebung des Fühlers mit kugelförmiger Taste (7) ein bewegliches Gestell (3) mit flacher Fußplatte (4) aufweist, die auf dem Tisch (1) ruht und auf der Tischebene regellos verschoben werden kann, eine gerade Gleitschiene (5), die mit dem Gestell ein Stück bildet und lotrecht zur Ebene der Fußplatte verläuft, und einen Schlitten (6), der entlang dieser Gleitschiene verschiebbar ist und an dem der Fühler mit kugelförmiger Meßtaste in einer gegenüber der Fußplatte versetzten Lage befestigt ist, daß die Fußplatte des beweglichen Gestells zwei Bezugselemente (10,20) aufweist, die zwei Fühlpunkte ($P_1$, $P_2$) einer parallel zum Tisch verlaufenden Geraden definieren, so daß diese beiden Punkte feste Positionen im Verhältnis zur Orthogonalprojektion (P') des Bezugsmittelpunkts (P) der kugelförmigen Taste des Fühlers in die Tischebene einnehmen ; daß der Tisch mit einer ebenen Erfassungsvorrichtung (2) mit einem Netz von Erfassungsorganen ($X_N1$, $Y_N1$) versehen ist, die entsprechend den beiden ersten rechtwinkligen Bezugskoordinatenachsen dieser Ebene, Abszissen (z) und Ordinaten (y), ausgerichtet sind und die auf die Positionsveränderungen der beiden Bezugselemente am Fuß ansprechen, die durch die regellose Verschiebung des Fußes bewirkt werden, um die Position jedes der beiden Fühlpunkte ($P_1$, $P_2$) zu erfassen, die durch diese Bezugselemente in bezug auf diese beiden ersten Koordinatenachsen definiert werden ; daß das bewegliche Gestell (3) mit einer linearen Erfassungsvorrichtung verbunden ist, die ein Erfassungsorgan (30) aufweist, welches auf die Verschiebungen des Schlittens entlang der Gleitschiene anspricht, um die Position des Mittelpunkts (P) der kugelförmigen Taste des Fühlers entlang einer dritten Koordinatenachse (Maße z) zu erfassen, die durch diese Gleitschiene gebildet ist, und daß der Meßwandlerkreis mit der ebenen und linearen Erfassungsvorrichtung verbunden ist und eine programmierbare Recheneinheit aufweist, um die Koordinaten, Abszisse (z) und Ordinate (y), des Berührungspunkts der kugelförmigen Taste des Fühlers mit dem Meßobjekt zu berechnen, ausgehend von der Position der beiden von der ebenen Erfassungsvorrichtung erfaßten Fühlpunkte ($P_1$, $P_2$), von der relativen Position der Orthogonalprojektion (P') des Mittelpunkts (P) der kugelförmigen Taste in bezug auf diese beiden Punkte und vom Durchmesser (D) dieser Taste, und zur Berechnung des Maßes (z) des Berührungspunkts (P) der kugelförmigen Taste mit dem Meßobjekt, ausgehend von der durch die Linearerfassungsvorrichtung erfaßten Position des genannten Mittelpunkts (P) der kugelförmigen Taste und vom Durchmesser (D) derselben.

## Claims

1. Process for the three-dimensional measurement of an article along three rectangular co-ordinate reference axes (x, y, z) in which the test piece is placed on a planar table, a probe having a spherical probe tip of given diameter connected to a detection device which is sensitive to its displacements in directions parallel and perpendicular to the planar table is displaced until it is placed in contact with the test piece, and in which the co-ordinates of the point of contact between the spherical probe tip and the test piece are calculated from the position of the centre of said detected spherical probe tip by the detection device by reference to the three rectangular co-ordinate axes, characterised by the following stages :

    – placing the test piece on a planar detection system of the grid type (2) having two rectangular co-ordinate axes (x, y) ;

    – associating with the planar detection system of the grid type (2) a system (5) for linear detection along a third co-ordinate axis (z) perpendicular to the first two (x, y), integral with a movable frame (4) capable of being displaced at random on said planar detection system of the grid type to form therewith a detection system having three co-ordinate axes ;

    – associating with the movable frame of the linear detection system two feeling points ($P_1$, $P_2$) placed on a support located in the plane of the planar detection system, these two points being at a constant distance from one another ;

    – associating with the linear detection system the probe having a spherical probe tip (7) which is movable along the third co-ordinate axis (z) of this system in such a way that the orthogonal projection (P') of its centre (P) on said plane of the planar detection system is at a fixed position offset from the right segment of straight line formed by the two feeling points ($P_1$, $P_2$) ;

    – displacing at random the movable frame (4) of the linear detection system with which the two feeling points ($P_1$, $P_2$) are associated over the plane of the detection system having two co-ordinate axes (x, y), and displacing the probe having a spherical probe tip along the third co-ordinate axis (z) of the detection system having three co-ordinate axes (x, y, z) to bring it into contact with the test piece ;

– detecting the position of the two feeling points ($P_1$, $P_2$) in the planar detection system having two co-ordinate axes (x, y) ;

– calculating the co-ordinates, abscissa (x) and ordinate (y), of the point of contact between the spherical probe tip of the probe and the test piece in the planar detection system of the grid type having two co-ordinate axes (x, y) from the detected position of the two feeling points ($P_1$, $P_2$), the relative position of the orthogonal projection (P') of the centre (P) of the spherical probe tip of the probe relative to these points, and the diameter (D) thereof ;

– detecting the position of the centre (P) of the spherical probe tip along the third co-ordinate axis (z) of the linear detection system ;

– calculating the elevation (z) of the point of contact of the spherical probe tip of the probe with the test piece in the linear detection system along to the third co-ordinate axis (z) from the detected position of the centre (P) of the spherical probe tip and the diameter (D) thereof.

2. Device for the three-dimensional measurement of an article along three rectangular co-ordinate reference axes (x, y, z) comprising a planar table intended to support the test piece, a probe having a spherical probe tip of given diameter (D) which is movable relative to the table and of which the centre (P) defines a reference point denoting its position in space relative to the three reference axes, a device for displacing the probe having a spherical probe tip in directions perpendicular and parallel to the planar table and a measuring transducer circuit which is sensitive to the displacements of the probe and is intended to translate into quantified values the co-ordinates of the point of contact between the spherical probe tip and the test piece by reference to the three co-ordinate axes (x, y, z), characterised in that the device for displacement of the probe having a spherical probe tip (7) comprises a movable frame (3) having a planar bearing base-plate (4) resting on the table (1) and intended to be displaced at random over the plane thereof, a rectilinear slideway (5) integral with the frame and perpendicular to the plane of the bearing baseplate, and a carriage (6) which is displaceable along this slideway and on which the probe having the spherical measuring probe tip is fixed in a position offset from the bearing base-plate, in that the bearing base-plate of the movable frame comprises two markers (10, 20) defining points ($P_1$, $P_2$) for feeling a straight line parallel to the table, these two points consequently being in positions which are fixed relative to the orthogonal projection (P') of the reference centre (P) of the spherical probe tip of the probe on the plane of the table, in that the table is associated with a planar detection device (2) comprising a grid of detecting elements ($X_N^1$, $Y_N^1$) which are orientated along two first rectangular co-ordinate reference axes in its plane, abscissae (x) and ordinates (y), and sensitive to the variations in positions of the set of two markers of the base-plate caused by the random displacements thereof to detect the position of each of the two points ($P_1$, $P_2$) defined by these marker points by reference to these first two co-ordinate axes, in that the movable frame (3) is associated with a linear detection device comprising a detecting element (30) which is sensitive to the displacements of the carriage along the slideway to detect the position of the centre (P) of the spherical probe tip of the probe along a third co-ordinate axis (elevations z) embodied by this slideway, and in that the measuring transducer circuit is connected to the planar and linear detection devices and comprises a programmable arithmetic and logic unit to calculate the co-ordinates, abscissa (x) and ordinate (y), of the point of contact between the spherical probe tip of the probe and the test piece from the position of the two feeling points ($P_1$, $P_2$) detected by the planar detection device, from the relative position of the orthogonal projection (P') of the centre (P) of the spherical probe tip relative to these two points and from the diameter (D) thereof, and to calculate the elevation (z) of the point of contact (P) between the spherical probe tip and the test piece from the position of said centre (P) of the spherical probe tip detected by the linear detection device and from the diameter (D) thereof.

_FIG.-1_

_FIG.-2_